# EUROPEAN PATENT APPLICATION

(11) **EP 4 534 455 A1**
(43) Date of publication of application: **09.04.2025**
(21) Application number: 24204686.0
(22) Date of filing: 04.10.2024
(51) Int. Cl.: B65G 37/02, B65G 54/02

(54) **MATRIX CONVEYOR SYSTEM FOR ASSEMBLY LINE PROCESSES**

(30) Priority: 04.10.2023 US 202363587877 P
(71) Applicant: ATS Corporation, Cambridge, ON N3H 4R7 (CA)
(72) Inventor: Drexler, Simon, Cambridge, ON N3H 4R7 (CA)
(74) Representative: Noble, Nicholas

(57) **Abstract**

A matrix conveyor system comprises a first plurality of conveyors arranged generally parallel to each other and a second plurality of conveyors arranged generally perpendicularly to the first plurality of conveyors. A plurality of processing stations are arranged along edges of matrix conveyor parallel to the first plurality of conveyors. Each of the first and second plurality of conveyors are controlled in order to selectively move one or more pallets through one or more of the plurality of processing stations.

## Description

### RELATED APPLICATIONS

The current application claims priority to US Provisional Application No. 63/587,877 filed Oct. 4th, 2023 and entitled "MATRIX CONVEYOR SYSTEM FOR ASSEMBLY LINE PROCESSES," the entire contents of which are incorporated herein by reference for all purposes.

### TECHNICAL FIELD

The current disclosure relates to conveyors and in particular to conveyors in an assembly line.

### BACKGROUND

Automated, or partially automated, assembly lines move components through various processing stations in order to assemble a product. The particular steps performed at different stations may vary depending upon the product being assemble or manufactured. Conveyor systems can be used to move components between processing stations.

Conveyors may be linear conveyors that move a pallet supporting the component from one position to another. Conveyors may move pallets on the same conveyor simultaneously using a belt or conveyor style mechanism. Additionally, or alternatively, conveyors may use linear motors to move pallets along a track. The use of linear motors can allow the motion of individual pallets to be controlled independent of other pallets on the conveyor.

Additional, alternative and or improved conveyor systems for use in automated, or semi-automated assembly lines is desirable.

### BRIEF DESCRIPTION

Further features and advantages of the present disclosure will become apparent from the following detailed description, taken in combination with the appended drawings, in which:
FIG. 1 depicts an assembly line using a matrix conveyor;
FIG. 2 depicts a component passing through an assembly line using a matrix conveyor;
FIG. 3 depicts a matrix conveyor with linear motion technology (LMT) conveyors;
FIGs. 4A-4C depict illustrative embodiments of a matrix conveyor; and
FIG. 5 depicts a method of assembling a component using a matrix conveyor.

### DETAILED DESCRIPTION

In accordance with the present disclosure there is provided a conveyor system for use in transporting a plurality of components in a partially automated assembly or manufacturing process comprising: a plurality of processing station locations arranged parallel to a transport axis; a plurality of transport conveyors, each of the plurality of transport conveyors arranged generally parallel to the transport axis, and offset from each other along an axis perpendicular to the transport axis, the plurality of transport conveyors arranged to transport one or more components to the processing station locations, at least one of the plurality of transport conveyors arranged adjacent to one or more of the plurality of processing station locations; and a plurality of transfer conveyors, each arranged between respective ones of the plurality of transfer conveyors to move components between the respective ones of the plurality of transport conveyors.

In a further embodiment of the conveyor system, the plurality of transport conveyors comprise a first transport conveyor arranged adjacent to a first subset of the plurality of processing station locations and a second transport conveyor arranged adjacent to a second subset of the plurality of processing station locations.

In a further embodiment of the conveyor system, the plurality of transport conveyors further comprise a third transport conveyor arranged between the first and second transport conveyors.

In a further embodiment of the conveyor system, none of the plurality of processing station locations are arranged adjacent the third transport conveyor.

In a further embodiment of the conveyor system, one or more of the plurality of transport conveyors comprise one or more of: a single strand conveyor; a multi strand conveyor; and a linear motion technology (LMT) conveyor.

In a further embodiment of the conveyor system, each of the plurality of transport conveyors comprise an LMT conveyor.

In a further embodiment of the conveyor system, one or more of the plurality of transfer conveyors comprise one or more of: a single strand conveyor; a multi strand conveyor; and a linear motion technology (LMT) conveyor.

In a further embodiment of the conveyor system, each of the plurality of transfer conveyors comprise a single or multi strand conveyor.

In a further embodiment of the conveyor system, the conveyor system further comprises a plurality of processing stations each arranged at a respective one of the plurality of processing station locations, each of the processing stations performing an assembly or manufacturing step on a component.

In a further embodiment of the conveyor system, the conveyor system further comprises a system controller comprising instructions which when executed by the system controller control the plurality of transport conveyors and the plurality of transfer conveyors in order to move components from an input location to an output location through one or more processing station locations.

In a further embodiment of the conveyor system, the instructions when executed by the system controller further configure the system controller to identify components at the input location; determine a processing order of processing station locations; and control the transport conveyors and transfer conveyors to move components to the processing station locations according to the determined processing order.

In accordance with the present disclosure there is further provided a method for use in an automated or semi-automated assembly or manufacturing process comprising: identifying at an input location to a matrix conveyor system a component for assembly or manufacture; determining a processing operation order for the identified component; determining a path through the matrix conveyor according to the determined processing operation order; and controlling the matrix conveyor to move the part through processing stations according to the processing order.

In a further embodiment of the method, determining the path through the matrix conveyor is further determined based on the processing operation order of other components being processed on the matrix conveyor.

In a further embodiment of the method, the matrix conveyor comprises a conveyor system according to any of the conveyor systems described above.

In accordance with the present disclosure there is further provided a non-transitory computer readable medium storing instructions which when executed by a processor of a system configure the system to perform a method according to any of the methods described above.

Assembly lines can be automated or semi-automated with a component being assembled moving through a number of assembly line nodes. The components may be moved through the assembly line using a conveyor, conveyors. It is desirable to be able to have a space-efficient assembly line in order to reduce the overall size required by the assembly line. As described in further detail below, a matrix conveyor can be used to provide an efficient arrangement of processing nodes. The matrix conveyor comprises a plurality of transport conveyors that can move the component to the locations of the processing nodes and one or more transfer conveyors that can move components between the transport conveyors. In addition to providing a space efficient assembly line, the matrix conveyor may also provide additional flexibility in the assembly line by facilitating switching processing nodes, either to change the functionality or replace a malfunctioning processing node. The processing nodes may be provided as a flexible module of a standard size, such as 1m x 1m allowing the same matrix conveyor to be reconfigured to provide various functionality.

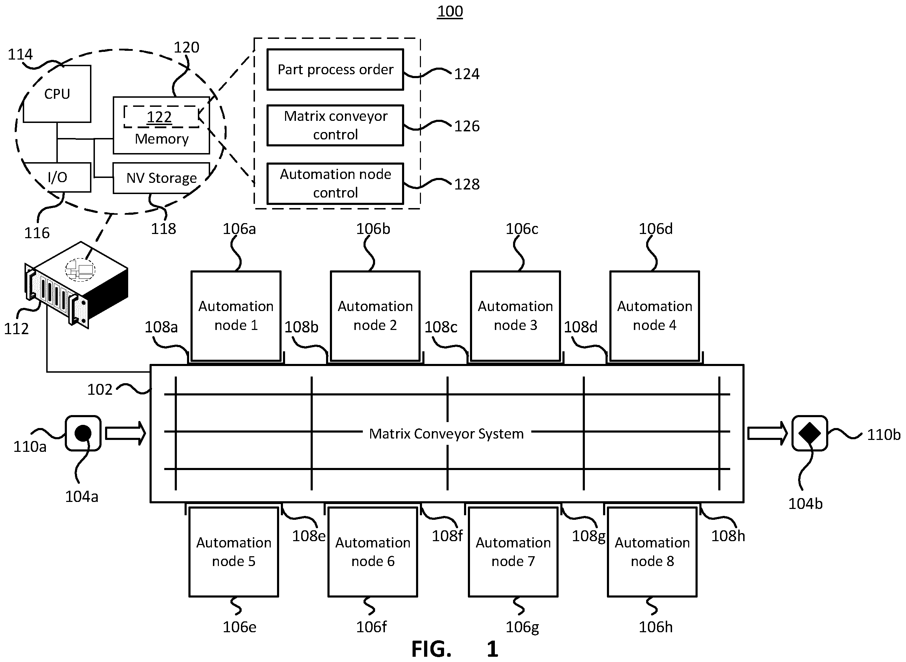

FIG. 1 depicts an assembly line using a matrix conveyor. The assembly line system 100 may be used for a wide range of applications. Although referred to as an assembly line, the applications are not limited to assembly, but can include other areas such as manufacturing, testing, packaging, etc. The assembly line system 100 comprises a matrix conveyor 102 that comprises a number of conveyors that can move a component through a plurality of processing steps. The component may start in an initial configuration or arrangement depicted as circle 104a and is transformed or processed to another configuration or arrangement, depicted as diamond 104b by one or more processing steps performed by one or more automation nodes 106a-h (referred to collectively as automation nodes 106). Each of the automation nodes 106 are arranged about the matrix conveyor 102 at respective processing node locations 108a-h (referred to collectively as automation node locations 108). As depicted, the automation node locations 108 may be located about the perimeter of the matrix conveyor 102 along two sides. The matrix conveyor can move the components being transported between the automation node locations on pallets 110a, 110b. The pallets may hold the component or a fixture supporting the component and the automation nodes may remove the component from the pallet in order to perform the processing step or steps of the automation node or the processing step or steps of the automation node may be performed with the component remaining on the pallet.

The automation nodes 106 can each be a modular component having a standard size while implementing different functionality. For example, each of the automation nodes 106 may be approximately 1m x 1m with a variable height. Although not depicted, each of the automation nodes may be connected power, communication, control, and/or data lines, which may include electrical lines, pneumatic lines, and/or hydraulic lines. The connections may be incorporated into a standard connection interface for the automation nodes 106. The connection may be a two part connection comprising a first half on the automation nodes 106 and the second half arranged on, or at, that matrix conveyor 102 in the area of the automation node locations 108.

The automation nodes 106 may perform certain actions, including inspection steps, testing steps, cleaning steps, forming steps, trimming steps, filling steps, sealing steps, packaging steps, etc. Additionally, the automation nodes may reorient the components on the pallet, either for processing by the current automation node or a subsequent automation node.

The matrix conveyor 102 enables modular automation nodes to be connected to the matrix conveyor at different locations. The particular location that a particular automation node is arranged at may be based on the processing order, for example, arranging automation nodes carrying out subsequent actions downstream from automation nodes carrying out prior actions. Each of the automation nodes may perform different tasks required to transform the initial component 104a to the final component 104b. Alternatively, one or more of the automation nodes may perform the same or similar processes. Such an arrangement may be beneficial if the processing time of one of the automation nodes is different from the other. For example, if a first automation node is relatively twice as fast compared to a second automation node, it is possible to use two of the second type of automation nodes in order to increase the throughput of the second step. Additionally or alternatively, if automation nodes may require frequent maintenance, additional redundant automation nodes may be used so that the automation process can continue while maintenance is performed on one of the automation nodes.

Further, the use of the matrix conveyor 102 enables automation nodes to be easily replaced with other automation nodes. Such configurability allows the matrix conveyor 102 to be easily reconfigured either to incorporate new automation nodes or possibly completely reconfigured to a different component assembly line. The configuration of the matrix conveyor can identify each of the automation nodes at the conveyor and their respective locations. The capabilities of each of the identified nodes can be determined and used to determine a process order for a part to travel through the matrix. The particular ordering of processes for a part may be provided by specifying the order of processes that need to be performed on the part or possibly the order of the automation nodes that the part needs to be processed by. Further, the order of operations, either by individual processes or by automation nodes, may be specified in an absolute order or in a relative order if there is flexibility in the operation order.

The control of the pallet and/or part through the matrix can be controlled by one or more controllers. For example, each individual conveyor of the matrix may have an associated controller that can control the pallets on the respective controller in order to move the pallets to their destinations without contacting any other pallets/parts. In addition to the individual conveyor controllers, the matrix of conveyor may be associated with a controller that can provide destinations for each of the pallets across the different individual conveyors.

The matrix conveyor 102, and the automation nodes 106 may be controlled by a system controller 112 which is depicted as a single computing device 112, although the system controller may be provided by a plurality of different computing devices. The computing device 112 is depicted as comprising a processor 114, an input/output (I/O) interface 116 for coupling additional components to other devices, a non-volatile storage device 118 for storage of data and/or instructions, and a memory 120 storing instructions and data 122. Additionally or alternatively the system controller 112 may comprise one or more of a field programmable gate array (FPGA) an application specific integration circuit (ASIC), controller, and/or microcontroller.

The instructions 122, when executed by the processor 114 configure the computing device 112 to perform various functionality including functionality for determining a process order for a part 124, and control functionality 126 for controlling the matrix conveyor. The functionality may also include functionality for controlling the automation nodes 128 although portions of the automation node control may be performed by one or more controllers of the automation nodes.

The part process order functionality determines an of automation nodes that a part should progress through from the input to the output. The process order may be based on the part being processed and the location automation nodes performing the various processing steps. The process order may be determined for a particular part and configuration of automation nodes at particular locations. The process order may be determined for each part, possibly scanning the part at the input to identify the part and possibly an orientation of the part on the pallet or other physical characteristics of the part. Further, the process order of the part through the system may be dependent upon the particular automation nodes and the locations of the automation nodes within the conveyor system. For example, if at the input a part may be in one of two orientations the orientation of the parts can be identified and the process order for those parts in the second orientation may first be processed by an automation node that reorients the parts to the first orientation. Parts in the first orientation, whether directly from the input or after re-orientation, can be processed by subsequent automation nodes. The matrix conveyor assembly line can be configured to produce a single part or component or may be configured to produce multiple different parts or components or different versions of the parts or components. In the case of producing multiple different parts or part versions, the processing order can be determined based on identifying the part to be produced and then determining what process steps need to be done in what order to produce the identified part and then determine the locations at the matrix conveyor that perform the particular steps.

The above process order determination has been described as being performed before, or as, a part enters the assembly line. It is possible that the processing order be dynamically determined as the part proceeds through the assembly line. For example, the results of one automation node may be determine according to the next processing step required.

The processing order determining functionality can determine the locations of the assembly nodes and the particular processing steps that the assembly nodes can perform. The assembly node locations may be periodically determined, for example when an assembly node is connected to the matrix conveyor, at the start of a time period, such as a day, or shift, etc.

Once the part order process is determined, or updated for dynamically determined process order, the matrix conveyor control functionality 126 controls both the transport conveyors and the transfer conveyors in order to move the part to the automation nodes according to the determined process order. The conveyors are also controlled to ensure that multiple parts, or pallets carrying parts, do not collide.

The automation node control functionality 128 may control the automation nodes in order to perform the required process steps on the parts or components as they move through the automation line. Although depicted as being part of the system controller 112, the automation node control functionality 128 may be implemented, at least partially, at the automation nodes.

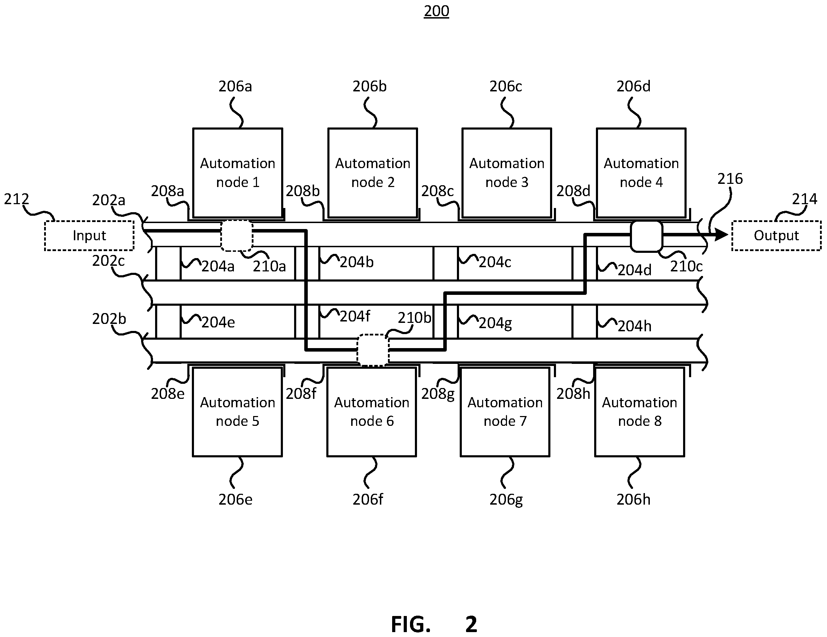

FIG. 2 depicts a component passing through an assembly line using a matrix conveyor. The matrix conveyor is depicted as comprising three transport conveyors 202a, 202b, 202c (referred to collectively as transport conveyors 202) and eight transfer conveyors 204a-204h (referred to collectively as transfer conveyors 204). The transport conveyors 202 are arranged generally parallel to each other. Each of the transport conveyors 202 can move parts or pallets in a transport direction. The axis of the transport direction of each of the transport conveyors 202 are generally parallel to each other. The transport conveyors 202 are offset from each other along an axis perpendicular to the transport axis. The transport conveyors 202 may move parts/pallets in a single direction or may move the parts in two directions. The transport conveyors 202 may be provided as single strand or multi strand conveyors, such as those produced by Glide-Line^{™} Panel & Pallet Conveyor Systems, or as linear motion technology (LMT) conveyors such as SuperTrak CONVEYANCE^{™} LMT by ATS Corporation. Each of the transport conveyors 202 are depicted as a single conveyor however, they may be provided as a plurality of conveyors.

As depicted, the transport conveyors 202 may be arranged with an upper conveyor line 202a and a lower conveyor line 202b. It is noted that reference to 'upper' and 'lower' is relative to the orientation depicted in FIG. 2. The upper and lower conveyors 202a, 202b have a number of automation locations 208a-208h arranged along their edges. As depicted a first set of locations 208a-208d are arranged about the exterior edge of the upper conveyor 202a and a second set of locations 208e-208h are arranged about the exterior edge of the lower conveyor 202b. A third transport conveyor 202c is depicted as being arranged between the upper and lower conveyors 202a, 202b.

A number of transfer conveyors 204 are arranged between transport conveyors 202. The transfer conveyors can move parts/pallets between respective transport conveyors 202. The transfer conveyors 204 are depicted as being arranged between the transport conveyors in a first direction and between automation nodes in a second direction. Similar to the transport conveyors 202, the transfer conveyors may be provided as single strand or multi strand conveyors, such as those produced by Glide-Line Panel & Pallet Conveyor Systems, or as linear motion technology (LMT) conveyors such as SuperTrak CONVEYANCE^{™}LMT by ATS Corporation. Given the relatively short length of the transfer conveyors 202, it may be preferable to implement the conveyors using the single or multi-strand conveyors which are typically less complex compared to LMT conveyors.

As depicted a part or pallet can move through, depicted by locations 210a, 210b, 210c, a plurality of processing steps performed by automation nodes at the respective locations. The transport and transfer conveyors 202, 204 can be controlled in order to move the part/pallet through from an input 212 to an output 214 as depicted by line 216. It will be appreciated that the locations of the automation nodes can be changed and the conveyors controlled to still carry out the same processing steps, although the locations may be different.

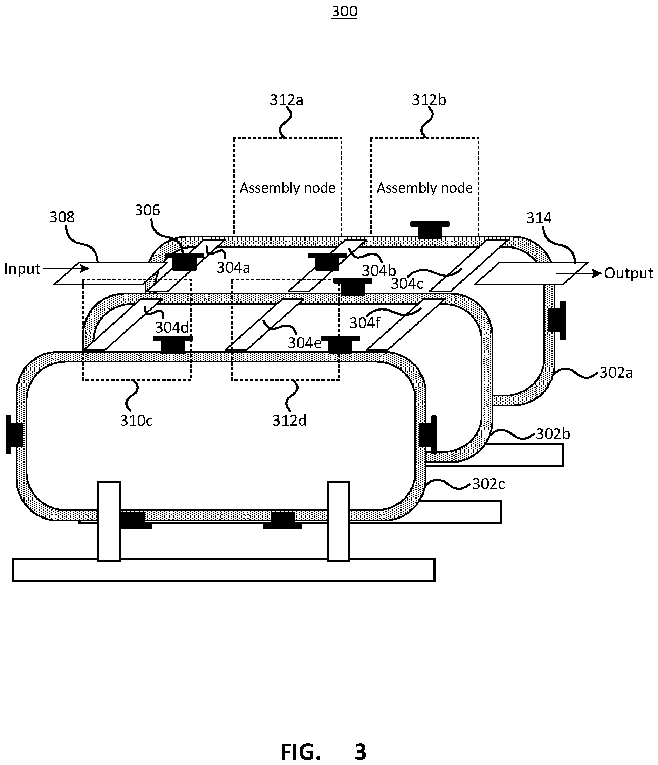

FIG. 3 depicts a matrix conveyor with linear motion technology (LMT) conveyors. The matrix conveyor 300 is depicted as comprising a number of LMT conveyors 302a-302c arranged as transport conveyors for moving parts/pallets to assembly nodes. A number of transfer conveyors 304a-304f are arranged between the transport conveyors. The transfer conveyors 304 are depicted as being implemented as single or multi strand conveyors. The LMT conveyors can move a plurality of pallets 306, can be moved about the conveyors on a loop. The LMT conveyors are able to independently control the motion of the pallets as they move. The conveyors 302 may be able to move the pallet in one or two directions on the loop. The upper and lower transport conveyors 302a, 302b are arranged adjacent assembly nodes 312a-312d and a third transport conveyor 302c is arranged between the upper and lower conveyors. The pallets may enter the matrix conveyor at an input location 308 and be processed by moving through one or more of the assembly nodes and then to an output location 314.

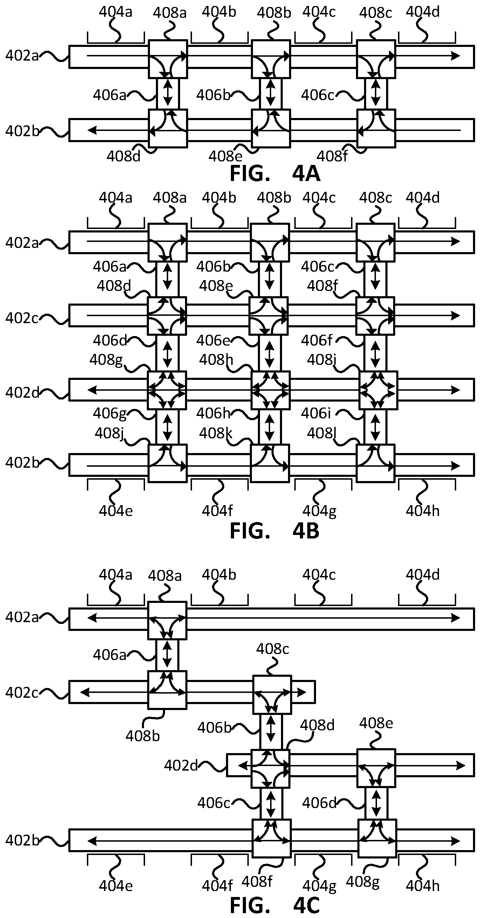

FIG. 4A-4C depict illustrative embodiments of a matrix conveyor. As depicted in FIGs. 4A-4C the matrix conveyor can be implemented with various different configurations of transport conveyors and transfer conveyors. It will be appreciated that the configurations depicted in the figures are only illustrative and other configurations are possible.

FIG. 4A depicts a matrix conveyor comprising two transport conveyors 402a, 402b. A plurality of automation node locations 404a, 404b, 404c, 404d are arranged about the exterior of the matrix conveyor adjacent the upper conveyor. As depicted, the upper and lower transport conveyors 402a, 402b may move in opposite directions, although they may move in the same direction, or may each be bi-directional. The matrix conveyor comprises a plurality of transfer conveyors 406a, 406b that can move parts/pallets between the transport conveyors. At the intersections of transport and transfer conveyors a merge/divert switching component 408a, 408b, 408c, 408d, 408e, 408f can be arranged in order to move pallets and/or parts from on conveyor to the other.

FIG. 4B depicts a matrix conveyor comprising four transport conveyors 402a-402d. The transport conveyors are arranged generally parallel to each other and offset from each other. As depicted the upper and lower transport conveyors may have a plurality of automation node locations 404a-404h arranged about the exterior edges. The upper and lower transport conveyors 402a, 402b may transport the parts/pallets in the same direction. A pair of intermediary transport conveyors 402c, 402d may be arranged between the upper and lower transport conveyors, with the pair of intermediary transport conveyors moving in opposite directions. A plurality of transfer conveyors 406a - 406i are arranged between the transport conveyors. Similar to FIG. 4A, switching component 408a-408l are located at the intersection between transport and transfer conveyors. The switching components allow the transfer of pallets and/or parts to be transferred from one conveyor to the next. The configuration depicted in FIG. 4B allows parts to be moved back and forth and up and down through the matrix conveyor to pass between automation nodes arranged at various locations.

FIG. 4C depicts a matrix conveyor similar to that depicted in FIG. 4B. Similar to the matrix conveyor of FIG. 4B, the matrix conveyor 4C comprises four transport conveyors 402a-402d with assembly node locations 404a-404h arranged about the upper and lower transport conveyors 402a, 402b. However, in contrast to the matrix conveyor of FIG. 4B, which has intermediary transport conveyors 402b, 402c that are the same length as the upper and lower transport conveyors, the matrix conveyor of FIG. 4C has intermediary transport conveyors 402c, 402d that are only partial length conveyors. A number of transfer conveyors 406a-406f can be arranged to transfer parts/pallets between respective transport conveyors. Similar to FIG. 4A, switching component 408a - 408g are located at the intersection between transport and transfer conveyors. The switching components allow the transfer of pallets and/or parts to be transferred from one conveyor to the next.

From the illustrative embodiments of the matrix conveyors described above, it will be appreciated that a matrix conveyor can have various configurations depending upon the particular requirements of an application.

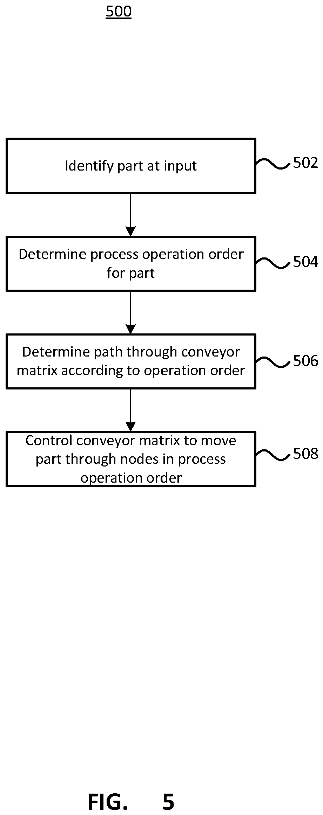

FIG. 5 depicts a method of assembling a component using a matrix conveyor. The method 500 may be implemented by the execution of instructions by a controller in order to perform the method. The method includes identifying a part at the input (502). The identification of the part may be performed in various ways. For example, the matrix conveyor may be configured to process a single part type in which case the determination of the part may be hard coded or otherwise specified. Additionally or alternatively, a scanner, camera or imaging system can be used to identify the part at the input for example by scanning a barcode or QR code on the part or pallet or using image recognition techniques to identify the part, and/or one or more physical characteristics of the part. Once the part is identified, a process operation order for the part is determined (504). Determining the processing order may be done by determining the processing steps required for the part and the automation nodes that can carry out the process steps. Once the process order is determined, the path through the matrix conveyor is determined (506) in order to move the part to the automation node locations performing the process steps in the order specified by the processing order. The process order, or the path, may be communicated to a controller and stored for various purposes, such as traceability of parts manufacturing, performance calculations of manufacturing, etc. In addition to controlling the matrix conveyor according to the process order, the conveyors are also controlled in order to avoid parts colliding. One or more of the conveyors can be used as a buffer to hold parts temporarily while other parts move about the matrix conveyor. For LMT conveyors, parts do not need to move in sync with each other on the same conveyor, while single or multi strand conveyors move parts together on the same section of the conveyor. Determining the path through the matrix can be fully determined when the part enters the matrix conveyor, or may be determined dynamically as the part moves through the matrix conveyor, possibly based on the availability of automation nodes to perform the process step, that is whether or not automation nodes are free or are currently performing an action. The path may also be determined based on the results of an automation step. For example, depending on the results of a processing step, the part may require one of a number of different process steps to be performed next. Once the path is determined, the matrix conveyor is controlled (508) in order to move the part/or pallet through the matrix conveyor to the appropriate automation node location according to the determined path. In addition to controlling the matrix conveyor according to the determined path, the matrix conveyor is controlled in order to avoid collisions of parts moving through the matrix conveyor.

The matrix conveyor described above can provide an assembly line that is both space effective with regard to the space required by the assembly line and can be relatively cost effective to implement using existing conveyor systems. Additionally, the matrix conveyor may utilize automation nodes of a standard size that can be provide flexibility with regard to what processes the assembly line can perform. The use of the module automation nodes can allow the assembly line to be easily reconfigured, either to produce different parts, replace malfunctioning automation nodes, add new automation nodes etc.

It will be appreciated by one of ordinary skill in the art that the system and components shown in FIGs. 1 - 5 may include components and/or steps not shown in the drawings. For simplicity and clarity of the illustration, elements in the figures are not necessarily to scale, are only schematic and are non-limiting of the elements structures. It will be apparent to persons skilled in the art that a number of variations and modifications can be made without departing from the scope of the invention as defined in the claims.

Although certain components and steps have been described, it is contemplated that individually described components, as well as steps, may be combined together into fewer components or steps or the steps may be performed sequentially, non-sequentially or concurrently. Further, although described above as occurring in a particular order, one of ordinary skill in the art having regard to the current teachings will appreciate that the particular order of certain steps relative to other steps may be changed. Similarly, individual components or steps may be provided by a plurality of components or steps. One of ordinary skill in the art having regard to the current teachings will appreciate that the components and processes described herein may be provided by various combinations of software, firmware and/or hardware, other than the specific implementations described herein as illustrative examples.

The techniques of various embodiments may be implemented using software, hardware and/or a combination of software and hardware. Various embodiments are directed to apparatus, e.g. a node which may be used in a communications system or data storage system. Various embodiments are also directed to non-transitory machine, e.g., computer, readable medium, e.g., ROM, RAM, CDs, hard discs, etc., which include machine readable instructions for controlling a machine, e.g., processor to implement one, more or all of the steps of the described method or methods.

Some embodiments are directed to a computer program product comprising a computer-readable medium comprising code for causing a computer, or multiple computers, to implement various functions, steps, acts and/or operations, e.g. one or more or all of the steps described above. Depending on the embodiment, the computer program product can, and sometimes does, include different code for each step to be performed. Thus, the computer program product may, and sometimes does, include code for each individual step of a method, e.g., a method of operating a communications device, e.g., a wireless terminal or node. The code may be in the form of machine, e.g., computer, executable instructions stored on a non-transitory computer-readable medium such as a RAM (Random Access Memory), ROM (Read Only Memory) or other type of storage device. In addition to being directed to a computer program product, some embodiments are directed to a processor configured to implement one or more of the various functions, steps, acts and/or operations of one or more methods described above. Accordingly, some embodiments are directed to a processor, e.g., CPU, configured to implement some or all of the steps of the method(s) described herein. The processor may be for use in, e.g., a communications device or other device described in the present application.

Numerous additional variations on the methods and apparatus of the various embodiments described above will be apparent to those skilled in the art in view of the above description. Such variations are to be considered within the scope.

## Claims

1. A conveyor system for use in transporting a plurality of components in a partially automated assembly or manufacturing process comprising:
a plurality of processing station locations arranged parallel to a transport axis;
a plurality of transport conveyors, each of the plurality of transport conveyors arranged generally parallel to the transport axis, and offset from each other along an axis perpendicular to the transport axis, the plurality of transport conveyors arranged to transport one or more components to the processing station locations, at least one of the plurality of transport conveyors arranged adjacent to one or more of the plurality of processing station locations; and
a plurality of transfer conveyors, each arranged between respective ones of the plurality of transfer conveyors to move components between the respective ones of the plurality of transport conveyors.

2. The conveyor system of claim 1, wherein the plurality of transport conveyors comprise a first transport conveyor arranged adjacent to a first subset of the plurality of processing station locations and a second transport conveyor arranged adjacent to a second subset of the plurality of processing station locations.

3. The conveyor system of claim 2, wherein the plurality of transport conveyors further comprise a third transport conveyor arranged between the first and second transport conveyors.

4. The conveyor system of claim 3, wherein none of the plurality of processing station locations are arranged adjacent the third transport conveyor.

5. The conveyor system of any one of claims 1 to 4, wherein one or more of the plurality of transport conveyors comprise one or more of:
a single strand conveyor;
a multi strand conveyor; and
a linear motion technology (LMT) conveyor.

6. The conveyor system of claim 4, wherein each of the plurality of transport conveyors comprise an LMT conveyor.

7. The conveyor system of any one of claims 1 to 5, wherein one or more of the plurality of transfer conveyors comprise one or more of:
a single strand conveyor;
a multi strand conveyor; and
a linear motion technology (LMT) conveyor.

8. The conveyor system of claim 6, wherein each of the plurality of transfer conveyors comprise a single or multi strand conveyor.

9. The conveyor system of any one of claims 1 to 8, further comprising a plurality of processing stations each arranged at a respective one of the plurality of processing station locations, each of the processing stations performing an assembly or manufacturing step on a component.

10. The conveyor system of any one of claims 1 to 9, further comprising a system controller comprising instructions which when executed by the system controller control the plurality of transport conveyors and the plurality of transfer conveyors in order to move components from an input location to an output location through one or more processing station locations.

11. The conveyor system of claim 10, wherein the instructions when executed by the system controller further configure the system controller to identify components at the input location; determine a processing order of processing station locations; and control the transport conveyors and transfer conveyors to move components to the processing station locations according to the determined processing order.

12. A method for use in an automated or semi-automated assembly or manufacturing process comprising:
identifying at an input location to a matrix conveyor system a component for assembly or manufacture;
determining a processing operation order for the identified component;
determining a path through the matrix conveyor according to the determined processing operation order; and
controlling the matrix conveyor to move the component through processing stations according to the processing order.

13. The method of claim 12, wherein determining the path through the matrix conveyor is further determined based on the processing operation order of other components being processed on the matrix conveyor.

14. The method of claim 12 or 13, wherein the matrix conveyor comprises a conveyor system according to any one of claims 1 to 11.

15. A non-transitory computer readable medium storing instructions which when executed by a processor of a system configure the system to perform a method according to any one of claims 12 to 14.
